Europäisches Patentamt

European Patent Office

Office européen des brevets

(19)

(11) Veröffentlichungsnummer: **0 041 689**
**B1**

(12) # EUROPÄISCHE PATENTSCHRIFT

(45) Veröffentlichungstag der Patentschrift:
**23.11.83**

(51) Int. Cl.³: **B 60 P 3/34**

(21) Anmeldenummer: **81104249.8**

(22) Anmeldetag: **03.06.81**

(54) **In Höhe und Länge variabler Wohnanhänger.**

(30) Priorität: **10.06.80 DE 3021684**

(43) Veröffentlichungstag der Anmeldung:
**16.12.81 Patentblatt 81/50**

(45) Bekanntmachung des Hinweises auf die Patenterteilung:
**23.11.83 Patentblatt 83/47**

(84) Benannte Vertragsstaaten:
**AT BE CH DE FR GB IT LI LU NL SE**

(56) Entgegenhaltungen:
**AT - B - 174 543**
**DE - A - 2 159 404**
**DE - A - 2 657 765**
**DE - A - 2 824 813**
**DE - U - 7 236 925**
**DE - U - 7 917 768**
**FR - A - 1 310 031**
**FR - A - 2 387 817**
**US - A - 2 167 557**
**US - A - 2 343 261**
**US - A - 3 124 386**
**US - A - 3 212 810**
**US - A - 4 106 732**

(73) Patentinhaber: **Findeisen, Felix, Dr., Kettwiger Strasse 31, D-4300 Essen 1 (DE)**

(72) Erfinder: **Findeisen, Felix, Dr., Kettwiger Strasse 31, D-4300 Essen 1 (DE)**

ACTORUM AG

## In Höhe und Länge variabler Wohnanhänger

Die Erfindung bezieht sich auf Wohnanhänger, die beim Fahren niedrig und kurz sein sollen, beim Wohnen aber auf normale Stehhöhe eines einteiligen Caravans und auch auf eine möglichst grosse Wohnfläche veränderlich sein sollen.

Angeregt wurden diese Alternativlösungen durch Probleme, die die heute am weitesten verbreiteten hohen einteiligen Wohnwagen für Reise und Strassenverkehr, für den Energieverbrauch und für die Abstellung bzw. Unterbringung nach der Reise mit sich bringen. Sie sollen nur kurz angedeutet werden:

1. auf Reisen oft schwieriges Fahren (Überholen auf Landstrassen, kurvenreiche enge Strassen, Fahrt im Gebirge und Winterfahrt);

2. im Strassenverkehr eigene und fremde Gefährdung durch das gefürchtete Pendeln bei kurzen Lenkeinschlägen (erneut in „ADAC-Motorwelt" 9/79, S. 24, mit Testergebnissen abgehandelt);

3. bei weiterer Energieverknappung immer zwingender werdende Massnahmen zur Energieeinsparung durch Verringerung des Fahrwiderstandes und des Gewichts;

4. keine Unterbringungsmöglichkeit in Normalgaragen selbst bei kleinen Wohnwagen wegen der Gesamthöhe;

5. mit Zunahme der Anzahl der üblichen hohen Wohnwagen verbundene Stellplatzprobleme auf Campingplätzen.

Gebräuchlich sind bereits niedrige Klapp- oder Faltcaravans mit festen bzw. starren Wänden. In einer Version weisen sie hochklappbare Stirn- und Seitenwände auf. Mittels der Stirnwände lässt sich ein Dach heben, das zugleich als Deckel für den Transportkasten dient. In dem Transportkasten sind niedrige Einbauteile, die Sitz- und Liegepolster, unter den Klappwänden untergebracht. Solche Klappwohnwagen lassen sich schnell und regengeschützt aufbauen oder aus dem aufgebauten Zustand zu einem flachen Anhänger mit niedrigem Schwerpunkt zusammenlegen und sind daher in fahrtechnischer Hinsicht vorteilhaft. Die Nachteile sind, dass die Wohnfläche nur auf die Fläche des Transportkastens beschrankt ist, und dass feste Einbauten wie Dachstaukästen und andere höhere Aufbauten wegen der Klappwände nur sehr beschränkt möglich sind.

Darüber hinaus kennt man verschiedene andere Klapp- oder Faltwohnwagenausführungen mit starren Wänden, bei denen sich mittels des aufgeklappten Transportkastendeckels die Boden- bzw. Wohnfläche verdoppeln lässt. Auch bei ihnen können die einzelnen Wände und Dachteile sinnreich auf kleinem Raum zusammengelegt werden und meist in einem sehr flachen Transportkasten untergebracht werden. Die Vorteile sind leichtes Gewicht, gute Unterbringungsmöglichkeit in Garagen, z.T. sogar seitlich gekippt an der Garagenwand, sowie problemloses Fahren. Der Raumgewinn ist teilweise beachtlich. Die Nachteile sind bei diesen Typen ebenfalls aus Konstruktionsgründen sehr beschränkte Einbaumöglichkeiten und wegen der meist sehr dünnen Wände mangelnde Isolierungsmöglichkeiten gegen Hitze und Kälte. Das Innere dieser Ausführungsformen ist bei Aufbau und Abbau vor Regen ungeschützt.

Gemäss deutschen und ausländischen patentamtlichen Druckschriften wurden auch bereits seit 1944 mehrfach Erfindungen veröffentlicht, die kompakte ineinanderfahrbare Bauteile zur Vergrösserung und Verkleinerung des Wohnanhängers in verschiedener Weise verwendet haben. Die meist älteren Konstruktionen erscheinen aber sehr aufwendig und kompliziert, so dass eine heute aus Energieersparnisgründen geforderte leichtbauweise schwierig und eine Herstellung sehr kostenaufwendig erscheint. Auch bei ihnen bestehen meist mangelnde Möglichkeiten heute üblicher komfortabler fester Wohneinbauten.

Den nächstliegenden Stand der Technik bildet wohl die Druckschrift US-A Nr. 3212810. In ihr wird ein zum Transport ineinanderfahrbarer Wohnwagen dargestellt, bei dem aus einem auf seinem Fahrgestell angeordneten Transportkastenvorderteil ein der Verlängerung dienendes Transport Kastenrückteil mittels eines eigenen Fahrgestells und eines horizontalen Hydraulikzylinders nach rückwärts teleskopartig herausfahrbar ist, wonach aus beiden auseinandergefahrenen Transportkastenteilen kompakte Wohnraumoberteile mittels zweier vertikaler Hydraulikzylinder hochverfahrbar sind. Bei einer solchen Konstruktion gemäss Fig. 1-15 der obigen Druckschrift sind Verklemmungen der gleitenden Wandteile mit der Inneneinrichtung bzw. der Zulandung nur schwer vermeidbar, da keine stationäre Innenwand zum Schutz vor den gleitenden Teilen vorgesehen ist. Ferner ist auch das Auseinander- und Ineinanderfahren des Vorder- und Rückteils trotz zusätzlicher Rollgleitvorrichtungen bei unebenem Gelände nur schwer ohne Verklemmungen der beiden Teile vorstellbar. Gegen Wind und Regen sind an den horizontalen und vertikalen Verbindungen der ausgefahrenen vier Kompaktteile zusätzliche komplizierte Abdicht- und Haltevorrichtungen erforderlich.

Die Erfindung gemäss der vorliegenden Anmeldung will den genannten Mängeln abhelfen. Sie stellt sich zur Aufgabe, einen in Höhe und Länge variablen Wohnanhänger mit kompakten Bauteilen zu verwirklichen, indem sie einen grösstmöglichen Wohnraumgewinn aus einem fahrtechnisch günstigen und energiesparenden, aber nicht maximal kleinen, sondern derart bemessenen Transportkasten zu erzielen sucht, dass dieser zwar bequem in der Garage unterbringbar, aber andererseits auch mit komfortablen, für heutige Reisecaravans üblichen festen Wohneinbauten ausrüstbar sein soll und zudem noch die Verlängerungsteile und bewegliches Inventar sowie zusätzliche Zuladung raummässig bequem mitführen soll. Ein Klemmen gleitender Teile soll konstruktionsmässig verhindert werden.

Der Erfindung, wie sie in den Ansprüchen gekennzeichnet ist, liegt die nachfolgend beschriebene Lösung der Aufgabe zugrunde:

Ein in Höhe und Länge variabler Wohnanhänger, der in einem auf seinem Fahrgestell angeordneten Transportkasten ein Wohnraumoberteil und ein Verlängerungsoberteil als kompakte Passteile zum Transport ineinander verschachtelt mitführt, kann mit Hilfe einer Hebevorrichtung beim Wohnaufbau in Höhe und Länge vergrössert werden, indem aus dem als Wohnraumunterteil ausgebildeten, feste Einbauten umfassenden Transportkasten, aus dem mitergänzenden festen Einbauten versehenen, dicht innerhalb des Transportkastens hochverfahrbaren Wohnraumoberteil und aus dem dicht ausserhalb des Wohnraumoberteils horizontal nach hinten verfahrbaren Verlängerungsoberteil ein Raumkörper herstellbar ist, zu dem für einen geschlossenen Wohnaufbau lediglich noch ein ergänzendes, vorzugsweise aus dem Transportkastendeckel und einer Seitenwandkulisse zu bildendes Verlängerungsunterteil unter dem Verlängerungsoberteil hinzukommt, wobei eine stationäre Innenwand im Transportkasten vorgesehen ist, die mit dessen Aussenwand einen spaltförmigen Zwischenraum bildet, um beim Transport die Wände des hochverfahrbaren Wohnraumoberteils und die Seitenwände des darübergeschobenen Verlängerungsoberteils aufzunehmen, und um in bevorzugter Ausführung beim Wohnaufbau dem Wohnraumoberteil mittels einer Abdeckung des spaltförmigen Zwischenraums eine stabile fugendichte horizontale Auflage zu bieten. Erfindungsgemäss ist ferner die Türausnehmung für die gesondert montierbare einteilige oder geteilte Eingangstür im Anschlussbereich der Verlängerungsteile angeordnet, wodurch sich eine einfache Möglichkeit ergibt, die für das Bewegungsspiel mit dem Wohnraumoberteil bemessene lichte Weite des Verlängerungsoberteils im Türbereich so zu reduzieren, dass beim Wohnaufbau auch eine feste und fugendichte Verbindung zwischen den beiden auseinandergefahrenen Oberteilen ohne komplizierte zusätzliche Abdichtvorrichtungen erreichbar ist.

Die Vorteile der Erfindung gegenüber dem nächstliegenden Stand der Technik sind vorwiegend darin zu sehen, dass neue konstruktive Merkmale ein Verklemmen der verfahrbaren Teile mit Sicherheit vermeiden, komplizierte Halte- und Abdichtvorrichtungen entbehrlich machen und hierdurch der heutigen Leichtbauweise zum Zwecke der Energieersparnis entgegenkommen. Auf die Lösung weiterer genannter Probleme wird später eingegangen.

Im folgenden wird die Erfindung anhand von lediglich einen Ausführungsweg darstellenden Zeichnungen näher erläutert. Es zeigt:

Abb. 1 einen erfindungsgemässen Wohnanhänger in zusammengelegtem fahrbereiten Zustand in Seitansicht,

Abb. 2 einen erfindungsgemässen Wohnanhänger in aufgebautem Zustand in Seitansicht, und

Abb. 3 eine Aufsicht auf den Gegenstand nach Abb. 2 mit Einrichtungsbeispiel.

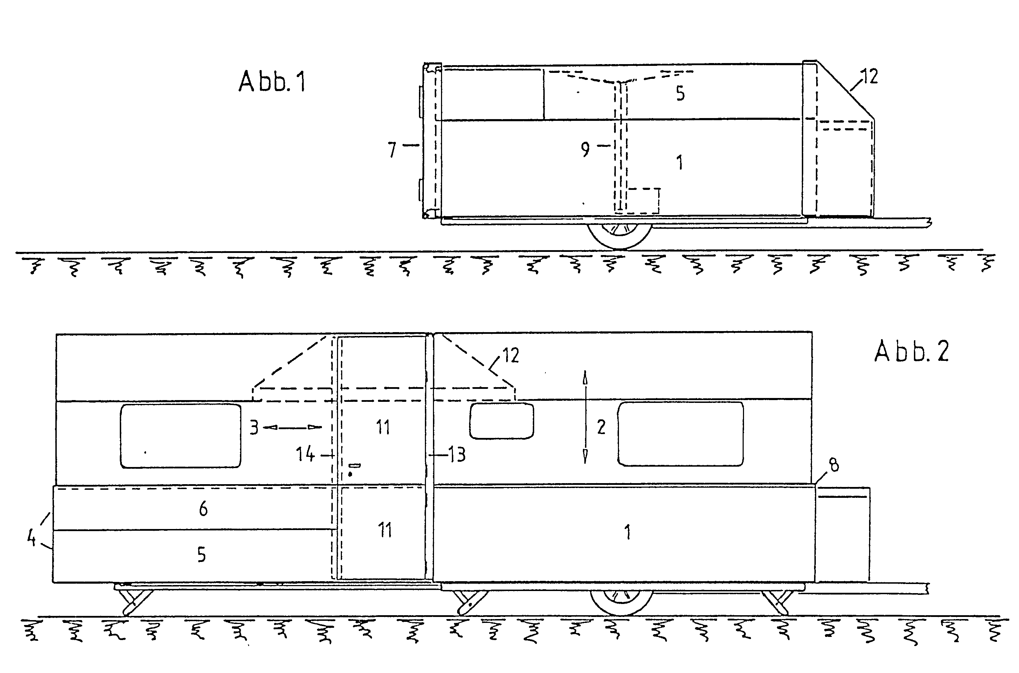

In Abb. 1 ist ein als Wohnraumunterteil ausgebildeter, mit üblichem Fahrwerk und Deichselkasten versehener Transportkasten 1 mit Transportkastendeckel 5 dargestellt. Der Transportkasten wird an der Rückseite durch eine mit den Verkehrsarmaturen versehene abklappbare Rückwand 7 verschlossen. An der Bugseite ist er mit einer den Deichselkasten übergreifenden windabweisenden Bugverkleidung 12 versehen.

In Abb. 2 ist ein aufgebauter Wohnanhänger auf herkömmlichen Kurbelstützen abgestützt mit den ihn bildenden Einzelteilen dargestellt. Ein vertikal verfahrbares Wohnraumoberteil 2 ist aus dem Transportkasten bzw. Wohnraumunterteil 1 hochgefahren und durch drei als Trag- und Verbindungsmittel dienende Auflageleisten 8 an das Wohnraumunterteil 1 angeschlossen. Ein horizontal verfahrbares Verlängerungsoberteil 3 ist auf dem Wohnraumoberteil 2 so weit nach rückwärts ausgefahren, dass es mit den Seitenwänden um einige Zentimeter überlappend, am Dach dagegen ineinandergefalzt und damit fluchtend an das Wohnraumoberteil 2 angeschlossen bleibt. Ein Verlängerungsunterteil 4, bestehend aus einem als Transportkastendeckel nutzbaren Bodenteil 5 und einer in drei Seitenwandteile zerlegbaren Seitenwandkulisse 6, ist in seinen Einzelteilen fluchtend miteinander verbunden und ebenfalls fluchtend an den Boden und die Seitenwände des Wohnraumunterteils 1 angeschlossen. Schliesslich ist das ausgefahrene Verlängerungsoberteil 3 an die mit fest angebrachten Auflageleisten ausgerüstete Seitenwandkulisse 6 und damit an das Verlängerungsunterteil 4 angeschlossen. Die in drei Seitenwandteile zerlegbare Seitenwandkulisse 6 und die drei zwischen Wohnraumunterteil 1 und Wohnraumoberteil 2 als Trag- und Verbindungsmittel dienenden Auflageleisten 8 sind im Transportkasten unterbringbar.

Eine geteilte Ausseneingangstür 11 ist in fluchtenden Türausnehmungen des Verlängerungsoberteils 3 und Verlängerungsunterteils 4 herausnehmbar angeordnet. Die beiden Türteile sind in gleicher Weise wie die Seitenwände der Verlängerungsteile 3 und 4 mittels einer am unteren Türteil fest angebrachten Auflageleiste aneinander anschliessbar. Sie sind mit aushängbaren Scharnierbändern versehen. Die dazugehörigen Scharnierbolzen befinden sich an einem ganzteiligen Türpfosten 13, der am Wohnraumoberteil 2 sowie auch an Einbauteilen des Wohnraumunterteils 1 verschraubt wird. Ein zweiter ganzteiliger Türpfosten 14 wird an den im Bereich der Türausnehmungen frei endenden Seitenwänden des Verlängerungsoberteils 3 und des Verlängerungsunterteils 4 innen zur Stabilisierung angebracht. Dieser Türpfosten gibt damit auch festen Halt zum Schliessen und Abschliessen der Ausseneingangstür. Die beiden Türpfosten sind wie die beiden aushängbaren Türteile im Transportkasten unterbringbar. Die Bugverkleidung 12 zur Verringerung des Luftwiderstandes beim Fahren ist als Türvordach nutzbar dargestellt.

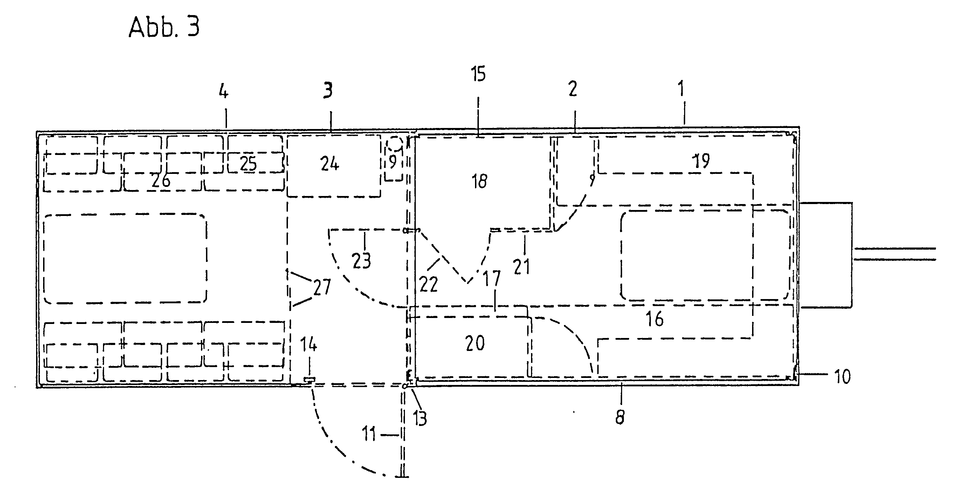

In der Abb. 3 sind in Aufsicht die Seitenwände der Oberteile 2 und 3 gegenüber den Seitenwänden der Unterteile 1 und 4 nach innen versetzt dargestellt, da sie nur durch diese Gestaltung nach dem horizontalen Ineinanderfahren der Oberteile 2 und 3 vertikal in das Wohnraumunterteil 1 heruntergefahren werden können. Weiter erkennt man, dass am Wohnraumunterteil 1 eine zusätzliche Innenwand 15 vorhanden ist. Diese bildet zugleich die nach oben verlängerte Rückwand am Boden fest eingebauter Sitzstaukästen 16 sowie die Rück- und Seitenwand eines am Boden fest eingebauten Küchenunterschrankes 17 und auch die Rück- und Seitenwand eines am Boden fest verankerten Duschkabinenunterteiles 18. Auch ist sie an der Bugseite mit den Stirnseitern der Sitzstaukästen 16 fest verbunden. Diese Innenwand 15 des Wohnraumunterteils 1 ergibt zusammen mit dessen Aussenwand eine feste Auflage für die als Trag- und Verbindungsmittel dienenden Auflageleisten 8, auf denen wiederum das gesamte Wohnraumoberteil 2 ruht.

An dieser Stelle soll durch ein Einrichtungsbeispiel näher erläutert werden, auf welche Weise trotz des Hoch- und Herunterfahrens des Wohnraumoberteils 2 auch an diesem ergänzende stabile Einrichtungen des vorderen Wohnraums fest installierbar sind, und zusätzlich das gesamte bewegliche Inventar vor allem auch des Verlängerungsteils in dem kurzen Transportkasten verstaubar ist. Es lässt sich bei vergleichender Betrachtung der drei Abbildungen erkennen, dass bei der lichten Höhe des heruntergefahrenen Wohnraumoberteils 2 von etwa 110 cm über den Sitzstaukästen 16 mit einer angenommenen Höhe von etwa 30-35 cm raummässig unschwer Dachstaukästen 19 mit einer Höhe von etwa 40 cm am Wohnraumoberteil 2 fest installierbar sind. Die Sitz- und Dachstaukästen beanspruchen zusammen nur 70-75 cm. Es bleibt daher ein Zwischenraum von etwa 35-40 cm. Da ohnehin im Bereich der Sitzstaukästen 16 in herkömmlicher Art nach Absenken des Tisches eine raumbreite Liegefläche für zwei Personen mittels der Sitzpolster herstellbar ist, besteht demnach die Möglichkeit, trotz der heruntergefahrenen Dachstaukästen 19 in diesem Bereich auch die Sitz- bzw. Liegepolster des Verlängerungsteils, insgesamt also Polster für zwei Liegeflächen von 190×160 cm bei einer Polsterdicke von 12 cm bequem zu verstauen. Desgleichen lässt sich unschwer vorstellen, dass über dem Küchenunterschrank 17, der wie üblich mit einem Zwei- oder Dreiflammenkocher und Spüle in einer angenommenen Arbeitshöhe von etwa 75 cm ausgerüstet sein kann, noch ein Küchenoberschrank 20 mit einer Höhe von etwa 35 cm sich fest am Wohnraumoberteil 2 anbringen lässt. Ein seitlich mit dem Küchenoberschrank und dem Dach des Wohnraumoberteils fest verbundenes Telebord von 75 cm Höhe würde demzufolge neben dem Küchenunterschrank bis auf die Höhe der Sitzstaukästen von 35 cm heruntergefahren werden. Schliesslich soll das ebenfalls am Dach des Wohnraumoberteils 2 angebrachte Duschkabinenoberteil 21 mit seinen Wänden in Höhe von 110 cm das mit Duschwanne und Waschbecken ausgerüstete Duschkabinenunterteil 18 mit einer Wandhöhe von etwa 85 cm übergreifen bzw. überstülpen, so dass beim Hochfahren des Wohnraumoberteils die Duschkabine automatisch auf volle Wohnraumhöhe gebracht wird. Ein seitlich am Duschkabinenoberteil und Dach des Wohnraumoberteils fest angebrachtes Schränkchen von 75 cm Höhe (für Bücher oder Gläser) würde entsprechend dem Telebord ebenfalls bis auf die Sitzstaukästen von 35 cm Höhe heruntergefahren werden. Alle Dachstaukästen, der Küchenoberschrank und auch die bugwärts gelegene Wand des Duschkabinenoberteils können ausser am Dach auch auf einer Strecke von etwa 30 cm fest an den Wänden des Wohnraumoberteils 2 verankert werden, müssen jedoch unterhalb davon um die Wandstärke der Innenwand 15 von der Wand des Wohnraumoberteils 2 abgerückt werden, damit beim Herunterfahren die Innenwand 15 in diese Aussparung hineingleiten kann.

Es ist nunmehr der Mittelraum zwischen den Dachstaukästen 19 über den Polsterstücken und der Mittelraum zwischen der heruntergefahrenen Duschkabine und den Küchenschränken in voller Höhe von 110 cm sowie auch der Raum in der Duschkabine noch als Stauraum frei. In diesem Stauraum können ein geteilter Schrank 24, geteilte anhängbare Dachstaukästen 25 und geteilte Sitztruhen 26 als bewegliches Inventar des Verlängerungsteils passgerecht untergebracht werden. Sogar eine Raumteilung des Verlängerungsteils ist möglich, um einen besonders bei Schlechtwetter zu begrüssenden Eingangsflur zu erzielen. Die raumteilenden Schiebewände 27 wie auch die einteilige Duschkabinentür 22 und eine eventuelle Tür 23 zwischen dem vorderen Wohnraum und dem Verlängerungsteil können grössenmässig gut auf den Polsterliegeflächen untergebracht werden.

Somit liess sich anhand dieses Einrichtungsbeispiels zeigen, dass eine komplette komfortable Ausstattung des erfindungsgemässen Wohnanhängers, zum grossen Teil sogar fest eingebaut, möglich ist.

In Abb. 3 und 1 ist noch eine herausnehmbare Hebevorrichtung 9 dargestellt. Sie kann im aufgebauten Zustand aus der Mitte des vorderen Wohnraums entfernt und gemäss Abb. 3 im Verlängerungsteil an einem vorgesehenen Abstellplatz aufbewahrt werden. Im zusammengelegten Zustand des Wohnanhängers gemäss Abb. 1 bleibt diese Hebevorrichtung 9 beim Transport an Ort und Stelle in der Mitte des Transportkastens.

Schliesslich sind noch gemäss Abb. 3 an allen vier äusseren Eckkanten der Innenwand 15 vier Winkelschienen angebracht, die jeweils einige Zentimeter über die Oberkanten der Wände herausragen müssen. Diese sind eingepasst in entsprechende Winkelschienen, welche ihrerseits in den inneren Eckkanten des Wohnraumoberteils 2 fest angebracht sind. Sie haben die Funktion von Gleitvorrichtungen 10 für das Hoch- und Herunterfahren des Wohnraumoberteils 2. Sie geben auch dem hochgefahrenen Wohnraumoberteil 2 Halt, bis es fest mit dem Wohnraumunterteil 1 verbunden ist.

Aus der Beschreibung des zur Lösung der gestellten Aufgabe verwendeten Prinzips und aus der vorangehenden Erläuterung eines Einrichtungsbeispiels ist ersichtlich, dass ein Wohnanhänger verwirklicht wird, der zur Lösung der eingangs erwähnten Probleme ebenso beitragen kann wie die heute bereits gebräuchlichen Falt- und Klappcaravans, der aber nicht in gleicher Weise deren Beschränkungen unterliegt.

Wenn heute einerseits besonders aus Energieeinsparungsgründen gefordert wird, zum kleineren PKW auch kleinere, weniger Luftwiderstand bietende und möglichst auch weniger Gewicht mitbringende Wohnwagen zu bauen, wenn aber andererseits dennoch eine gewisse Wohnraumgrösse und Ausstattung besonders mit Stauraum für Familien mit Kindern erforderlich bleibt, und darüber hinaus gewisse Ansprüche an Hygiene und an die Isolierungseigenschaften eines Wohnwagens gestellt werden, so kann die Lösung des Problems dieser widersprüchlichen Forderungen nur in einem möglichst optimalen Kompromiss liegen. Ein solcher Kompromiss wird mit dem erfindungsgemässen Wohnanhänger angestrebt.

Als besonder Vorteil des erfindungsgemässen Wohnanhängers wird daher neben der Lösung der eingangs erwähnten Probleme die verbesserte Wohnqualität gegenüber den gebräuchlichen Klappwohnwagen und auch gegenüber kleinen einteiligen Wohnwagen angesehen. Tatsächlich kann mit relativ geringem Aufwand aus dem kleinen Transportkasten von etwa 3 m Länge, 2 m Breite und 1,50-1,60 m Fahrhöhe ein bezüglich Wohnlichkeit und Komfort ansprechender und mit 6 m Wohnlänge, 1,90 m Wohnbreite und 2,30-2,40 m Gesamthöhe geräumiger Ferienwohnwagen für eine Familie mit 2-3 Kindern oder für 4 Erwachsene geschaffen werden. Hierzu ist allerdings eine kurze Aufbautätigkeit unter Verwendung technischer Hilfsmittel erforderlich. Das Anbringen eines Vorzeltes ist wie bei den einteiligen Wohnwagen zusätzlich möglich.

## Patentansprüche

1. In Höhe und Länge variabler Wohnanhänger, der in einem auf seinem Fahrgestell angeordneten Transportkasten (1) ein Raumoberteil (2) und ein Verlängerungsoberteil (3) als kompakte Passteile zum Transport ineinander verschachtelt mitführt, der mit Hilfe einer Hebevorrichtung (9) beim Wohnaufbau in Höhe und Länge vergrössert werden kann, wobei aus dem als Wohnraumunterteil ausgebildeten, feste Einbauten (16, 17, 18) umfassenden Transportkasten (1), aus dem mit ergänzenden festen Einbauten (19, 20, 21) versehenen, dicht innerhalb des Transportkastens (1) hochverfahrbaren Wohnraumoberteil (2), und aus dem dicht ausserhalb des Wohnraumoberteils horizontal nach hinten verfahrbaren Verlängerungsoberteil (3) ein Raumkörper herstellbar ist, zu dem für einen geschlossenen Wohnaufbau lediglich noch ein neu zu bildendes Verlängerungsunterteil (4) unter dem Verlängerungsoberteil (3) hinzukommt, wobei vorzugsweise der Transportkastendeckel (5) als Bodenteil des Verlängerungsunterteils (4) nutzbar ist, dadurch gekennzeichnet, dass eine Seitenwandkulisse (6) das Bodenteil des Verlängerungsunterteils (4) ergänzt, und dass im Transportkasten (1) eine zusätzliche stationäre Innenwand (15) vorgesehen ist, die den Längsseiten des Transportkastens (1) und dessen Bugseite unter Bildung eines dazwischenliegenden spaltartigen Zwischenraums entsprechend gross ausgebildet ist, wobei der Zwischenraum für die Aufnahme der Wände des Wohnraumoberteils (2) und der Seitenwände des darübergeschobenen Verlängerungsoberteils (3) bemessen ist.

2. In Höhe und Länge variabler Wohnanhänger gemäss Anspruch 1, dadurch gekennzeichnet, dass die Türausnehmung für die einteilige oder geteilte Eingangstür (11) im Anschlussbereich des Verlängerungsoberteils (3) und des Verlängerungsunterteils (4) angeordnet ist.

## Claims

1. A caravan which is variable both in height and length and which carries, in a transport case (1) arranged on the chassis of the caravan, an upper accomodation unit (2) and an upper extension unit (3) which, being compact fitting units, are interlaced into each other for transport purposes, the said transport case being configured in such a way as to be expanded or enlarged, for lodging purposes, in both height and length, using a simple lifting equipment (9). Thus, the said transport case (1) designed as lower lodging unit and comprising fixed or stationary built-in furniture and fixtures (16, 17, 18), in conjunction with the upper lodging unit (2), provided with supplementary stationary built-in furniture and fixtures (19, 20, 21) and which can be drawn up closely within the transport case (1), and, finally, with the upper extension unit (3), which is displaceable in a horizontal backward movement closely outside the upper lodging unit, can be converted into a space element which, for the purpose of representing an enclosed lodging unit, requires only an additional lower extension part (4) fitted below the upper extension part (3), to which effect, preferably, the transport case cover (5) is usable as floor part of the lower extension unit (4), the whole concept being characterized by the fact that a side-wall link (6) supplements the floor part of the lower extension unit (4), while, within the transport case (1), an additional stationary inner wall (15) has been provided for, the dimensions of which have been adapted to the longitudinal sides of the transport case (1) and its front side, thus forming an intermediate gap-like clearance, this clearance having been dimensioned in such a way as to receive the partitions of the upper lodging unit (2) and the side-walls of the overlying upper extension unit (3).

2. A caravan according to claim 1, variable both in height and length, characterized in that the door bay for the undivided or divided entrance door (11) is arranged in the area of connection of the upper extension unit (3) and the lower extension unit (4).

## Revendications

1. Caravane variable en hauteur et en longueur qui comporte, dans une caisse de transport (1) disposée sur son châssis, une unité supérieure de logement (2) et une unité supérieure d'extension (3), lesquelles constituent des unités ajustables compactes, emboîtables les unes dans les autres pour le transport, cette caravane pouvant être agrandie, à l'aide d'un dispositif de levage (9), en hauteur et en longueur, de sorte que la caisse de transport (1) conçue comme unité inférieure de logement et renfermant des installations fixes (16, 17, 18), conjointement avec l'unité supérieure de logement (2) comportant des installations fixes supplémentaires (19, 20, 21) et déplaçable en haut juste à l'intérieur de la caisse de transport (1), et avec l'unité supérieure d'extension (3), déplaçable horizontalement en arrière juste à l'extérieur de l'unité supérieure de logement, peut être transformée en un corps habitable qui, pour constituer une structure de logement renfermée, n'a plus besoin que d'une unité inférieure d'extension (4) additionnelle, arrangée au-dessous de l'unité supérieure d'extension (3), à quel effet on peut se servir convenablement du couvercle de la caisse de transport (5) pour former la partie de fond de l'unité inférieure d'extension (4), cette conception de caravane étant caractérisée par le fait qu'une coulisse de paroi latérale (6) vient compléter la partie de fond de l'unité inférieure d'extension (4) et qu'est prévue, dans la caisse de transport (1), une paroi intérieure stationnaire supplémentaire (15) dont les dimensions ont été adaptées aux côtés longitudinaux de la caisse de transport (1) et à la partie frontale, tout en tenant compte d'un espace intermédiaire conformé sous la forme d'une fente, cet espace intermédiaire étant dimensionné de façon à permettre le logement des parois de l'unité supérieure de logement (2) et des parois latérales de l'unité supérieure d'extension (3) emboîtée sur cette première.

2. Caravane variable en hauteur et en longueur, conçue conformément à la revendication 1, caractérisée par le fait que la baie relative à la portière indivisée ou divisée (11) est disposée au niveau de connexion de l'unité supérieure d'extension (3) et de l'unité inférieure d'extension (4).

Abb.1

Abb.2

0 041 689

Abb. 3